(19) Europäisches Patentamt / European Patent Office / Office européen des brevets

(11) **EP 2 563 852 B1**

(12) **EUROPÄISCHE PATENTSCHRIFT**

(45) Veröffentlichungstag und Bekanntmachung des Hinweises auf die Patenterteilung:
**13.06.2018 Patentblatt 2018/24**

(21) Anmeldenummer: **11716837.7**

(22) Anmeldetag: **20.04.2011**

(51) Int Cl.:
*B29D 7/01* (2006.01)   *B29K 23/00* (2006.01)
*B29K 105/04* (2006.01)   *B29K 105/16* (2006.01)
*B29C 55/00* (2006.01)   *B29C 55/14* (2006.01)
*C08K 3/22* (2006.01)   *C08J 5/18* (2006.01)
*C08K 5/098* (2006.01)   *C08L 23/12* (2006.01)
*H01G 9/00* (2006.01)   *H01G 9/02* (2006.01)
*H01G 11/52* (2013.01)   *H01M 10/052* (2010.01)
*H01M 2/14* (2006.01)   *H01M 2/16* (2006.01)

(86) Internationale Anmeldenummer:
**PCT/EP2011/002028**

(87) Internationale Veröffentlichungsnummer:
**WO 2011/134626 (03.11.2011 Gazette 2011/44)**

(54) **HOCHPORÖSE SEPARATOR-FOLIE**

HIGHLY POROUS SEPARATOR FILM

FEUILLE SÉPARATRICE DE HAUTE POROSITÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.04.2010 DE 102010018374**

(43) Veröffentlichungstag der Anmeldung:
**06.03.2013 Patentblatt 2013/10**

(73) Patentinhaber: **Treofan Germany GmbH & Co. KG**
**66539 Neunkirchen (DE)**

(72) Erfinder:
• **BUSCH, Detlef**
  **66740 Saarlouis (DE)**
• **SCHMITZ, Bertram**
  **F-57200 Sarreguemines (FR)**
• **KLEIN, Dominic**
  **66450 Bexbach (DE)**

(74) Vertreter: **Kremer, Viola**
**Treofan Germany GmbH & Co. KG**
**Am Prime Parc 17**
**65479 Raunheim (DE)**

(56) Entgegenhaltungen:
EP-A1- 1 757 653   WO-A1-2010/066389
WO-A1-2010/066390   WO-A1-2010/145770
WO-A2-03/094832   WO-A2-2009/132803
WO-A2-2011/076375

## Beschreibung

Die vorliegende Erfindung betrifft eine poröse Folie und ihre Verwendung als Separator, sowie ein Verfahren zur Herstellung der Folie.

Moderne Geräte erfordern eine Energiequelle, wie Batterien oder Akkus, die eine räumlich unabhängige Nutzung ermöglichen. Batterien haben den Nachteil, daß man sie entsorgen muß. Daher werden vermehrt Akkumulatoren (sekundäre Batterien) eingesetzt, die man mit Hilfe von Ladegeräten am Stromnetz immer wieder aufladen kann. Nickel-Cadmium-Akkus (NiCd-Akkus) können beispielsweise bei sachgerechtem Gebrauch eine Lebensdauer von ca. 1000 Ladezyklen erreichen.

Batterien und Akkus bestehen immer aus zwei Elektroden, die in eine Elektrolytlösung eintauchen und einem Separator, der Anode und Kathode trennt. Die verschiedenen Akkutypen unterscheiden sich durch das verwendete Elektrodenmaterial, den Elektrolyten und den verwendeten Separator. Ein Batterieseparator hat die Aufgabe Kathode und Anode in Batterien, beziehungsweise negative und positive Elektrode in Akkumulatoren, räumlich zu trennen. Der Separator muß eine Barriere sein, welche die beiden Elektroden elektrisch voneinander isoliert, um interne Kurzschlüsse zu vermeiden. Gleichzeitig muß der Separator jedoch durchlässig für Ionen sein, damit die elektrochemischen Reaktionen in der Zelle ablaufen können.

Des weiteren erlangen elektrochemische Doppelschichtkondensatoren (DSK) eine zunehmende Bedeutung als ergänzende Energiequelle, welche die Lücke zwischen herkömmlichen Batterien, bzw. Akkus und Kondensatoren schließen. Da sie schnell eine hohe elektrische Leistung aufnehmen und für kurze Zeit zur Verfügung stellen, können sie eine vorhandene Energiequelle unterstützen oder einen vorhanden Generator ergänzen oder einen kurzzeitigen Stromausfall überbrücken, bis ein Notaggregat zeitverzögert gestartet werden kann.

Aufbau und Herstellung der DSK sind mit denen von Lithium-Ionen-Batterien vergleichbar. Ein elektrochemischer Doppelschichtkondensator besteht im wesentlichen aus zwei Elektroden, die in eine Elektrolytlösung eintauchen und die durch den Separator getrennt sind. Dieser Separator muß porös ausgebildet sein und den Elektrolyten aufnehmen. Er muß gleichzeitig für den Elektrolyten, insbesondere für die Ionen, die sich durch Dissoziation des im Elektrolyten gelösten Leitsalzes ausbilden, durchlässig sein. Als Separatoren werden daher poröse Materialien gewählt, beispielsweise aus Papier. Möglich sind jedoch auch Separatoren aus anderen Materialien, beispielsweise Kunststoffolien, Filzen oder Geweben aus Kunststoff- oder Glasfasern.

Üblicherweise werden zur Erhöhung der Kapazität mehrere Elektrodenlagen und Separatorschichten alternierend übereinander gestapelt, beispielsweise als planarer Stapel oder noch einfacher und platzsparender in Form eines Wickels. Die Größe des Spaltes zwischen den beiden Elektroden wird durch die Dicke des Separators und gegebenenfalls durch eventuell vorhandene Dichtungen bestimmt. Damit die Elektrolyt/Separator-Kombination möglichst wenig zum Innenwiderstand beiträgt, sollte der Separator dünn und sehr porös sein, da die Porosität näherungsweise quadratisch zum elektrischen Widerstand beiträgt. Außerdem sollte der Separator im gegebenen Elektrolyten eine ausreichende Stabilität zeigen. Glasfaservliese oder Papiere erfüllen die Anforderungen insbesondere bezüglich der hohen Porosität gut.

Zur Verbesserung des Innenwiderstandes kann die Dicke des Separators reduziert oder dessen Porosität erhöht werden. Unter Umständen kann eine Erhöhung der Porosität effektiver sein als eine Reduktion der Separatordicke. Dieser Optimierung durch hohe Porositäten und geringe Dicken sind jedoch durch die mechanische Stabilität der Separatoren Grenzen gesetzt, da insbesondere bei rauhen, körnigen oder faserigen Elektrodenoberflächen der Separator leicht durchstochen werden kann. Insbesondere Separatoren bei denen die mechanische Stabilität nur in eine Richtung optimiert ist, z.B. bei monoaxial gereckten Folien, zeigen eine zu hohe Spleißneigung in Längsrichtung. Auch bei biaxial orientierten Folien wird zur Erhöhung der Porosität oftmals eine hohe Orientierung bereits bei der Längsreckung in die Folie eingebracht. Beispielsweise beschreibt US 7,235,203, daß eine hohe Orientierung der ß-Kristallite nach der Längsstreckung zur Ausbildung einer hohen Porosität vorteilhaft beiträgt. Dadurch sind jedoch auch diese porösen Folien in Querrichtung nicht ausreichend stabil.

Es besteht daher ein Bedürfnis die mechanische Stabilität von Folien mit hoher Porosität und geringen Dicken, insbesondere deren Spleißneigung in Längsrichtung, zu verbessern.

Es sind verschiedene Verfahren bekannt nach denen Polyolefinfolien mit hohen Porositäten hergestellt werden können: Füllstoffverfahren; Kaltverstreckung, Extraktionsverfahren und ß-Kristallitverfahren. Diese Verfahren unterscheiden sich grundsätzlich durch die verschiedenen Mechanismen, durch welche die Poren erzeugt werden.

Beispielsweise können durch den Zusatz von sehr hohen Füllstoffmengen poröse Folien hergestellt werden. Die Poren entstehen beim Verstrecken durch die Unverträglichkeit der Füllstoffe mit der Polymermatrix. Die großen Füllstoffmengen von bis zu 40 Gew.-%, welche zur Erzielung von hohen Porositäten erforderlich sind, beeinträchtigen jedoch die mechanische Festigkeit trotz hoher Verstreckung erheblich, so daß diese Produkte als Separatoren in einer DSK nicht eingesetzt werden können.

In den sogenannten Extraktionsverfahren werden die Poren im Prinzip durch Herauslösen einer Komponente aus der Polymermatrix durch geeignete Lösemittel erzeugt. Hier haben sich vielfältige Varianten entwickelt, die sich durch Art der Zusatzstoffe und die geeigneten Lösemittel unterscheiden. Es können sowohl organische als auch anorganische Zusatzstoffe extrahiert werden. Diese Extraktion kann als letzter Verfahrensschritt bei der Herstellung der Folie erfolgen oder mit einer anschließenden Verstreckung kombiniert werden.

Ein älteres aber erfolgreiches Verfahren beruht auf einer Verstreckung der Polymermatrix bei sehr niedrigen Temperaturen (Kaltverstreckung). Hierzu wird die Folie zunächst extrudiert und anschließend zur Erhöhung des kristallinen Anteils für einige Stunden getempert. Im nächsten Verfahrensschritt erfolgt die KaltVerstreckung in Längsrichtung bei sehr niedrigen Temperaturen, um eine Vielzahl von Fehlstellen in Form kleinster Mikrorisse zu erzeugen. Diese vorgestreckte Folie mit Fehlstellen wird anschließend bei erhöhten Temperaturen mit höheren Faktoren nochmals in die gleiche Richtung verstreckt, wobei die Fehlstellen zu Poren vergrößert werden, die eine netzwerkartige Struktur ausbilden. Diese Folien vereinen hohe Porositäten und gute mechanische Festigkeit in Richtung ihrer Verstreckung, im allgemeinen die Längsrichtung. Die mechanische Festigkeit in Querrichtung bleibt dabei jedoch mangelhaft, wodurch die Durchstoßfestigkeit schlecht ist und eine hohe Spleißneigung in Längsrichtung entsteht. Insgesamt ist das Verfahren kostenintensiv.

Ein weiteres bekanntes Verfahren zur Herstellung von porösen Folien basiert auf der Zumischung von β-Nukleierungsmitteln zu Polypropylen. Durch das ß-Nukleierungsmittel bildet das Polypropylen beim Abkühlen der Schmelze sogenannte ß-Kristallite in hohen Konzentrationen. Bei der anschließenden LängsVerstreckung erfolgt eine Umwandlung der ß-Phase in die alpha-Modifikation des Polypropylens. Da sich diese unterschiedlichen Kristallformen in der Dichte unterscheiden, entstehen auch hier zunächst viele mikroskopische Fehlstellen, die durch die Verstreckung zu Poren aufgerissen werden. Die nach diesem Verfahren hergestellten Folien haben gute Porositäten und gute mechanische Festigkeiten in Längs- und Querrichtung und eine sehr gute Wirtschaftlichkeit. Diese Folien werden nachstehend auch ß-poröse Folien genannt. Nach diesem Verfahren lassen sich jedoch keine hochporösen Folien herstellen, die sehr niedrige Gurley Werte aufweisen. Zur Verbesserung der Porosität kann eine höhere Orientierung in Längsrichtung vor der Querstreckung eingebracht werden. Dadurch erhöht sich jedoch gleichzeitig die Spleißneigung in Längsrichtung, so daß die mechanischen Eigenschaften wiederum nicht gut genug sind, um den hohen Anforderungen zu genügen.

Beispielsweise beschreibt US 7,235,203 solche Folien mit hohen Porosität von unter 500s/100ml, deren Porosität durch Einbringung einer hohen Orientierung in Längsrichtung verbessert wird. Nach dieser Lehre wird die Orientierung in Längsrichtung dadurch erhöht, daß man bei der Verstreckung (in Längsrichtung) einen sehr hohen Einsprung von 25 bis 50% oder mehr zuläßt. Als Alternative wird eine zweite Methode beschrieben, nach der nadelförmigen Kristalle als ß-Nukleierungsmittel eingesetzt werden. Durch diese nadelförmigen Kristalle bilden sich bereits beim Abkühlen der Schmelze zur Vorfolie die ß-Kristallite mit einer Vorzugsorientierung in Längsrichtung aus. Diese längsorientierten Kristalle tragen zur einer erhöhten Orientierung bei, so daß nach der Längsstreckung eine besonders hohe Orientierung in Längsrichtung vorliegt. Diese beiden Verfahren können auch kombiniert werden, so daß entweder über den Einsprung oder die Verwendung von nadelförmigen Kristalliten oder über beide Maßnahmen eine längsgestreckte Folie mit einer sehr hohen Längsorientierung erhalten wird. Nach dem anschließenden Querverstrecken dieser hohen längsorientierten Folie werden sehr hohe Porositäten erreicht. Die hohe Längsorientierung führt jedoch trotz der abschließenden Querverstreckung zu einer starken Spleißneigung in Längsrichtung. Die Spleißneigung beeinträchtigt aber die Laufsicherheit der Folie bei der Querstreckung und bei der vorgesehenen Verarbeitung zum Separator.

Die WO2009132803 betrifft eine biaxial orientierte, einschichtige mikroporöse Folie mit Abschaltfunktion aus Propylenhomopolymer und Propylen-Blockcopolymer I und ß-Nukleierungsmittel. Der Schmelzebereich des Propylen-Blockcopolymer I beginnt bei einer Temperatur im Bereich von 50 bis 120°C.

EP1757653 beschreibt ß-poröse Folien und ein Verfahren zur Herstellung von biaxial orientierten mikroporösen Folien mit einem niedrigem Gurley Wert. Der niedrige Gurley Wert wird nach der Lehre der EP1757653 dadurch erzielt, daß man zunächst eine Verstreckung in Längsrichtung mit einem hohen Streckfaktor (>5) und bei niedrigen Temperaturen ausführt und anschließend diese hochorientierte Folie in Querrichtung verstreckt.

Die WO03/094832 betrifft ein Verfahren zur Erhöhung des Anteils der ß-Kristallmodifikatlon in Polypropylen durch Einkompoundieren nanokristalliner Substanzen. Mit diesem Verfahren wird ein ß-Anteil von 50-100 % erzielt. Die Compounds zeichnen sich durch verbesserte mechanische Eigenschaften aus. Die nanokristallinen Pulver können sowohl direkt einkompoundiert, als auch zur besseren Dispergierung in der PP-Matrix mit oberflächenaktiven Substanzen kompatibilisiert werden.

Die WO2011/076375 betrifft eine biaxial orientierte, ein- oder mehrschichtige poröse Folie aus Propylenhomopolymer und/oder Propylen-Blockcopolymer und ß-Nukleierungsmittel, die einen Gurley Wert von 50 bis <400s hat. Die Folie hat in Längsrichtung bei 100°C/1Stunde einen Schrumpf von <5% und bei 100°C/1Stunde einen Querschrumpf von <10%. Die Folie wird für Doppelschichtkondensator verwendet.

Die Aufgabe der vorliegenden Erfindung bestand daher darin, eine poröse Folie zur Verfügung zu stellen, die eine hohe Porosität und Durchlässigkeit aufweist und hinsichtlich ihrer mechanischen Festigkeit, insbesondere hinsichtlich ihrer Spleißneigung in Längsrichtung, verbessert ist und damit in geringen Dicken als Separator in den verschiedensten Anwendungen eingesetzt werden kann.

Die der Erfindung zugrundeliegende Aufgabe wird gelöst durch ein Verfahren zur Herstellung einer einschichtigen oder mehrschichtigen porösen Polypropylenfolie bei welchem Propylenpolymer und ß-Nukleierungsmittel in einem Extruder aufgeschmolzen und durch eine Flachdüse auf eine Abzugswalze extrudiert wird, auf der sich der Schmelzefilm unter Ausbildung von ß-Kristalliten abkühlt und verfestigt und diese Folie anschließend in Längsrichtung und danach in Querrichtung verstreckt wird, wobei bei der Querverstreckung mit einer langsamen Streckgeschwindigkeit von weniger als 40%/sec verstreckt wird.

Die der Erfindung zugrundeliegende Aufgabe wird weiterhin gelöst durch ein Verfahren zur Herstellung einer einschichtigen oder mehrschichtigen porösen Polypropylenfolie bei welchem in einem ersten Längsstreckverfahren Propylenpolymer und ß-Nukleierungsmittel in einem Extruder aufgeschmolzen und durch eine Flachdüse auf eine Abzugswalze extrudiert wird, auf der sich der Schmelzefilm unter Ausbildung von ß-Kristalliten abkühlt und verfestigt und diese Folie anschließend in Längsrichtung verstreckt, abgekühlt und aufgewickelt wird und diese längsverstreckte, aufgewickelte Folie in einem zweiten Querstreckverfahren abgewickelt, auf Querstrecktemperatur erwärmt und in Querrichtung verstreckt wird, wobei die Verfahrensgeschwindkeit des Längsstreckverfahrens größer oder kleiner als die Verfahrensgeschwindigkeit des Querstreckverfahrens ist.

Die Unteransprüche geben bevorzugte Ausführungsformen des erfindungsgemäßen Verfahrens an.

Überraschenderweise ist es möglich eine poröse Folie aus Polypropylen und ß-Nukleierungsmitteln mit sehr hohen Porosität und hoher Durchlässigkeit von <250s zur Verfügung zu stellen, welche sich gleichzeitig durch eine hervorragend niedrige Spleißneigung auszeichnet und damit auch für den Einsatz als Separator im DSK (Doppelschichtkondensator) besonders geeignet ist. Der Gurley Wert der erfindungsgemäße Folie liegt im allgemeinen in einem Bereich von <200s, vorzugsweise 50 bis 180s, insbesondere 80 bis 150s.

Es wurde im Rahmen der vorliegenden Erfindung gefunden, daß es möglich ist eine Folie, die nach Längsverstreckung eine moderate Orientierung in Längsrichtung aufweist, so in Querrichtung zu orientieren, daß eine hohe Porosität und eine sehr hohe Durchlässigkeit erzielt und die Spleißneigung in Längsrichtung abgebaut wird. Dabei ist es erfindungswesentlich diese Querstreckung mit einer sehr langsamen Streckgeschwindigkeit von vorzugsweise unter 40%/s durchzuführen.

Die erfindungsgemäße Folie umfaßt mindestens eine poröse Schicht, die aus Propylenpolymeren, vorzugsweise Proyplenhomopolymeren und/oder Propylenblockcopolymeren, aufgebaut ist und ß-Nukleierungsmittel enthält. Gegebenenfalls können zusätzlich andere Polyolefine in geringen Mengen enthalten sein, soweit sie die Porösität und andere wesentliche Eigenschaften nicht nachteilig beeinflussen. Des weiteren enthält die mikroporöse Schicht gegebenenfalls zusätzlich übliche Additive, beispielsweise Stabilisatoren und/oder Neutralisationsmittel in jeweils wirksamen Mengen.

Geeignete Propylenhomopolymeren enthalten 98 bis 100 Gew.-%, vorzugsweise 99 bis 100 Gew.-% Propyleneinheiten und besitzen einen Schmelzpunkt (DSC) von 150°C oder höher, vorzugsweise 155 bis 170°C, und im allgemeinen einen Schmelzflußindex von 0,5 bis 10 g/10 min, vorzugsweise 2 bis 8 g/10 min, bei 230°C und einer Kraft von 2,16 kg (DIN 53735). Isotaktische Propylenhomopolymere mit einem n-heptan löslichen Anteil von unter 15 Gew.-%, vorzugsweise 1 bis 10 Gew.-%, stellen bevorzugte Propylenhomopolymere für die Schicht dar. Vorteilhaft können auch isotaktische Propylenhomopolymere mit einer hohen Kettenisotaktizität von mindestens 96%, vorzugsweise 97 - 99% ($^{13}$C-NMR; Triaden Methode) eingesetzt werden. Diese Rohstoffe sind als HIPP-Polymere (Hoch isotaktische Polypropylene) oder HCPP (Hoch Kristalline Polypropylene) im Stand der Technik bekannt und zeichnen sich durch eine hohe Stereoregularität der Polymerketten, höhere Kristallinität und einen höheren Schmelzpunkt aus (im Vergleich zu Propylenpolymeren mit einer $^{13}$C-NMR-Isotaktizität von 90 bis <96%, die gleichfalls eingesetzt werden können).

Propylen-Blockcopolymere haben einen Schmelzpunkt von über 140 bis 170°C, vorzugsweise von 145 bis 165°C, insbesondere 150 bis 160°C und einen Schmelzebereich der bei über 120°C, vorzugsweise in einem Bereich von 125 - 140°C beginnt. Der Comonomer-, vorzugsweise Ethylen-Gehalt liegt beispielsweise zwischen 1 und 20 Gew.-%, bevorzugt 1 und 10 Gew.-%. Der Schmelzflußindex der Propylen-Blockcopolymere liegt im allgemeinen in einem Bereich von 1 bis 20 g/10min, vorzugsweise 1 bis 10 g/10min.

Gegebenenfalls kann die poröse Schicht zusätzlich andere Polyolefine enthalten, soweit sie die Eigenschaften, insbesondere die Porosität und die mechanischen Festigkeiten, nicht negativ beeinflussen. Andere Polyolefine sind beispielsweise statistische Copolymere von Ethylen und Propylen mit einem Ethylengehalt von 20 Gew.-% oder weniger, statistische Copolymere von Propylen mit $C_4$-$C_8$-Olefinen mit einem Olefingehalt von 20 Gew.-% oder weniger, Terpolymere von Propylen, Ethylen und Butylen mit einem Ethylengehalt von 10 Gew.-% oder weniger und mit einem Butylengehalt von 15 Gew.-% oder weniger, oder Polyethylene, wie beispielsweise LDPE, VLDPE, und LLDPE.

In einer bevorzugten Ausführungsform ist die poröse Schicht nur aus Propylenhomopolymer und/oder Propylenblockcopolmyer und ß-Nukleierungsmittel, sowie gegebenenfalls Stabilisator und Neutralisationsmittel aufgebaut.

Als ß-Nukleierungsmittel sind für die poröse Schicht grundsätzlich alle bekannten Zusatzstoffe geeignet, welche die Bildung von ß-Kristallen des Polypropylens beim Abkühlen einer Polypropylenschmelze fördern. Derartige ß-Nukleierungsmittel, als auch ihre Wirkungsweise in einer Polypropylenmatrix, sind an sich im Stand der Technik bekannt und werden nachstehend im Einzelnen beschrieben.

Von Polypropylen sind verschiedene kristalline Phasen bekannt. Beim Abkühlen einer Schmelze bildet sich üblicherweise überwiegend das $\alpha$-kristalline PP, dessen Schmelzpunkt im Bereich von 155 - 170°C, vorzugsweise 158 - 162 °C liegt. Durch eine bestimmte Temperaturführung kann beim Abkühlen der Schmelze ein geringer Anteil an ß-kristalliner Phase erzeugt werden, welche gegenüber der monoklinen $\alpha$-Modifikation mit 145 - 152°C, vorzugsweise 148 - 150°C einen deutlich niedrigeren Schmelzpunkt aufweist. Im Stand der Technik sind Additive bekannt, die zu einem erhöhten Anteil der ß-Modifikation beim Abkühlen des Polypropylens führen, beispielsweise $\gamma$-Quinacridone, Dihydro-quinacridine oder Calciumsalze der Phtalsäure.

Für die Zwecke der vorliegenden Erfindung werden vorzugsweise hochaktive ß-Nukleierungsmittel eingesetzt, welche beim Abkühlen einer Propylenhomopolymerschmelze einen ß-Anteil von 40-95%, vorzugsweise von 50-85% (DSC) erzeugen. Der ß-Anteil wird aus dem DSC der abgekühlten Propylenhomopolymerschmelze bestimmt. Bevorzugt ist beispielsweise ein zweikomponentiges ß-Nukleierungssystem aus Calciumcarbonat und organischen Dicarbonsäuren, welches in der DE 3610644 beschrieben ist, worauf hiermit ausdrücklich Bezug genommen wird. Besonders vorteilhaft sind Calciumsalze der Dicarbonsäuren, wie Calciumpimelat oder Calciumsuberat wie in DE 4420989 beschrieben, auf die ebenfalls ausdrücklich Bezug genommen wird. Auch die in EP-0557721 beschriebenen Dicarboxamide, insbesondere N,N-Dicyclohexyl-2,6-Naphtalendicarboxamide, sind geeignete ß-Nukleierungsmittel.

Vorzugsweise werden keine Nukleierungsmittel eingesetzt, welche nadelförmige Kristalle bilden, damit die Orientierung in Längsrichtung nicht zusätzlich erhöht wird.

Zusätzlich zu den ß-Nukleierungsmitteln ist die Einhaltung eines bestimmten Temperaturbereiches und Verweilzeiten bei diesen Temperaturen beim Abkühlen des unverstreckten Schmelzefilms für die Erzielung eines hohen Anteils an ß-kristallinem Polypropylen wichtig. Die Abkühlung des Schmelzefilms erfolgt vorzugsweise bei einer Temperatur von 60 bis 140°C, insbesondere 80 bis 130°C, beispielsweise 85 bis 125 oder 120°C. Eine langsame Abkühlung fördert das Wachstum der ß-Kristallite ebenfalls, daher sollte die Abzugsgeschwindigkeit, d.h. die Geschwindigkeit mit welcher der Schmelzefilm über die erste Kühlwalze läuft, langsam sein, damit die notwendigen Verweilzeiten bei den gewählten Temperaturen ausreichend lange sind. Die Abzugsgeschwindigkeit beträgt vorzugsweise weniger als 25 m/min, insbesondere 1 bis 20 m/min. Die Verweilzeit beträgt im Allgemeinen 20 bis 300s; vorzugsweise 30 bis 200s.

Die poröse Schicht enthält im allgemeinen 45 bis <100 Gew.-%, vorzugsweise 50 bis 95 Gew.-%, Propylenhomopolymere und/oder Propylenblockcopolymer und 0,001 bis 5 Gew.-%, vorzugsweise 50 - 10.000 ppm mindestens eines ß-Nukleierungsmittels, bezogen auf das Gewicht der porösen Schicht. Für den Fall, daß weitere Polyolefine in der Schicht enthalten sind, wird der Anteil des Propylenhomopolymeren oder des Blockcopolymeren entsprechend reduziert. Im allgemeinen wird die Menge der zusätzlichen Polymeren in der Schicht 0 bis <10 Gew.-%, vorzugsweise 0 bis 5 Gew.-%, insbesondere 0,5 bis 2 Gew.-% betragen, wenn diese zusätzlich enthalten sind. In gleicher Weise gilt, daß der besagte Propylenhomopolymer oder Propylenblockcopolymer Anteil reduziert wird, wenn höhere Mengen von bis zu 5 Gew.-% Nukleierungsmittel eingesetzt werden. Zusätzlich kann die Schicht übliche Stabilisatoren und Neutralisationsmittel, sowie gegebenenfalls weitere Additive, in den üblichen geringen Mengen von unter 2 Gew.-% enthalten.

In einer bevorzugten Ausführungsform ist die poröse Schicht aus einer Mischung aus Propylenhomopolymer und Propylenblockcopolymer aufgebaut. Die poröse Schicht enthält in diesen Ausführungsformen im allgemeinen 50 bis 85 Gew.-%, vorzugsweise 60 bis 75 Gew.-%, Propylenhomopolymere und 15 bis 50 Gew.-% Propylenblockcopolymere, vorzugsweise 25 bis 40 Gew.-%, und 0,001 bis 5 Gew.-%, vorzugsweise 50 bis 10.000 ppm mindestens eines ß-Nukleierungsmittels, bezogen auf das Gewicht der Schicht, sowie gegebenenfalls die bereits erwähnten Additive wie Stabilisatoren und Neutralisationsmittel. Auch hier gilt, daß weitere Polyolefine in einer Menge von 0 bis <10 Gew.-%, vorzugsweise 0 bis 5 Gew.-%, insbesondere 0,5 bis 2 Gew.-% enthalten sein können, und der Anteil des Propylenhomopolymeren oder des Blockcopolymeren dann entsprechend reduziert wird.

Besonders bevorzugte Ausführungsformen der erfindungsgemäßen porösen Folie enthalten 50 bis 10.000ppm, vorzugsweise 50 bis 5000ppm, insbesondere 50 bis 2000ppm Calcium-Pimelat oder Calcium-Suberat als ß-Nukleierungsmittel in der porösen Schicht.

Die poröse Folie kann ein oder mehrschichtig sein. Die Dicke der Folie liegt im allgemeinen in einem Bereich von 10 bis 100 $\mu$m, vorzugsweise 15 bis 60 $\mu$m, beispielsweise 15 bis 40$\mu$m. Die poröse Folie kann auf ihrer Oberfläche mit einer Corona, Flamm- oder Plasmabehandlung versehen werden, um die Befüllung mit Elektrolyten zu verbessern.

In einer mehrschichtigen Ausführungsform umfaßt die Folie weitere poröse Schichten, welche wie vorstehend beschrieben aufgebaut sind, wobei die Zusammensetzung der verschiedenen porösen Schicht nicht unbedingt identisch sein muß. Für mehrschichtige Ausführungsformen beträgt die Dicke der einzelnen Schichten im allgemeinen 2 bis 50$\mu$m.

Die Dichte der porösen Folie liegt im allgemeinen in einem Bereich von 0,1 bis 0,6 g/cm$^3$, vorzugsweise 0,2 bis 0,5 g/cm$^3$. Für die Verwendung der Folie als Separator in Doppelschichtkondensatoren weist die Folie einen Gurley Wert von <200s auf. Der Bubble point der Folie sollte nicht über 350nm, vorzugsweise im Bereich von 50 bis 300nm liegen und der mittlere Porendurchmesser sollte im Bereich 50 bis 100 nm, bevorzugt im Bereich 60 - 80 nm liegen.

Die vorliegende Erfindung betrifft weiterhin ein Verfahren zur Herstellung der porösen Folie. Nach diesem Verfahren wird die poröse Folie nach dem an sich bekannten Flachfolien-Extrusions- oder -Coextrusionsverfahren hergestellt. Im Rahmen dieses Verfahrens wird so vorgegangen, daß die Mischung aus Propylenhomopolymer und/oder Propylenblockcopolymer und ß-Nukleierungsmittel und gegebenenfalls weiteren Polymeren der jeweiligen Schicht vermischt, in einem Extruder aufgeschmolzen und, gegebenenfalls gemeinsam und gleichzeitig, durch eine Flachdüse auf eine Abzugswalze extrudiert oder coextrudiert wird/werden, auf der sich der ein- oder mehrschichtige Schmelzefilm unter Ausbildung der ß-Kristallite verfestigt und abkühlt. Die Abkühltemperaturen und Abkühlzeiten werden so gewählt, daß ein möglichst hoher Anteil an ß-kristallinem Polypropylen in der Vorfolie entsteht. Im allgemeinen beträgt diese Temperatur der Abzugswalze oder der Abzugswalzen 60 bis 140°C, vorzugsweise 80 bis 130°C. Die Verweilzeit bei dieser Temperatur kann variieren und sollte mindestens 20 bis 300s, vorzugsweise 30 bis 100s betragen. Die so erhaltene Vorfolie enthält im allgemeinen einen Anteil an ß-Kristalliten von 40 - 95%, vorzugsweise 50 - 85%.

Diese Vorfolie mit einem hohen Anteil an ß-kristallinem Polypropylen wird anschließend derart biaxial gestreckt, daß es bei der Verstreckung zu einer Umwandlung der ß-Kristallite in $\alpha$-kristallines Polypropylen und zur Ausbildung einer netzwerkartigen porösen Struktur kommt. Die biaxiale Streckung (Orientierung) wird im allgemeinen aufeinanderfolgend durchgeführt werden, wobei vorzugsweise zuerst längs (in Maschinenrichtung) und dann quer (senkrecht zur Maschinenrichtung) gestreckt wird.

Für die Verstreckung in Längsrichtung wird die abgekühlte Vorfolie zunächst über eine oder mehrere Aufheizwalzen geführt, welche die Folie auf die geeignete Temperatur erwärmen. Im allgemeinen beträgt diese Temperatur weniger als 140°C, vorzugsweise 70 bis 120°C. Das Längsstrecken erfolgt dann im allgemeinen mit Hilfe zweier entsprechend dem angestrebten Streckverhältnis verschieden schnellaufender Walzen. Das Längs-Streckverhältnis liegt dabei in einem Bereich von 2:1 bis 6:1, vorzugsweise 3:1 bis 5:1. Zur Vermeidung einer zu hohen Orientierung in Längsrichtung wird der Breiteneinsprung beim Längsstrecken gering gehalten, beispielsweise durch die Einstellung eines vergleichsweise engen Streckspaltes. Die Länge des Streckspaltes beträgt im allgemeinen 3 bis 100mm, vorzugsweise 5 bis 50mm. Gegebenenfalls könne auch fixierende Elemente, wie Breithalter zu einem geringen Breiteneinsprung beitragen. Der Einsprung sollte unter 10%, vorzugsweise 0,5 - 8%, insbesondere 1 - 5% betragen.

Nach dieser Längsverstreckung wird die Folie zunächst wieder über entsprechend temperierte Walzen abgekühlt. Anschließend erfolgt in den sogenannten Aufheizfeldern wieder eine Erwärmung auf die Querstrecktemperatur, die im allgemeinen bei einer Temperatur von 120 -145°C liegt. Anschließend erfolgt das Querstrecken mit Hilfe eines entsprechenden Kluppenrahmens, wobei das Querstreckverhältnis in einem Bereich von 2:1 bis 9:1, vorzugsweise 3:1 - 8:1 liegt. Zur Erzielung der erfindungsgemäß hohen Porositäten erfolgt die Querstreckung mit einer moderaten bis langsamen Querstreckgeschwindigkeit von >0 bis 40%/s, vorzugsweise in einem Bereich von 0,5 bis 30%/s, insbesondere 1 bis 15%/s. Die langsame Querstreckung führt überraschenderweise zu einer höheren Porosität und höheren Durchlässigkeit bei gleichzeitiger Verbesserung der Laufsicherheit der Folie. Die Streckgeschwindigkeit kann prinzipiell über die Verfahrensgeschwindigkeit an sich oder über die Länge des Querstreckrahmens variiert werden. Je schneller, (bzw. je langsamer) die Produktionsgeschwindigkeit bei der Herstellung der Folie (Verfahrensgeschwindigkeit) ist, desto höher (bzw. desto langsamer) ist auch die Querstreckgeschwindigkeit, jeweils bei einem gegebenen Streckfaktor. Alternativ kann die Querstreckung um den gleichen Faktor über einen längeren Weg, d.h. einen längeren Streckrahmen durchgeführt werden, um die Querstreckgeschwindigkeit zu verringern.

Gegebenenfalls wird nach der letzten Streckung, im allgemeinen die Querstreckung, eine Oberfläche der Folie nach einer der bekannten Methoden corona-, plasma- oder flammbehandelt. Abschließend erfolgt gegebenenfalls eine Thermofixierung (Wärmebehandlung), bei welcher die Folie etwa 5 bis 500s, vorzugsweise 10 bis 300s lang bei einer Temperatur von 110 bis 150°C, vorzugsweise bei 125 bis 145°C gehalten wird, beispielsweise über Walzen oder einen Luftheizkasten. Gegebenenfalls wird die Folie unmittelbar vor oder während der Thermofixierung konvergierend gefahren, wobei die Konvergenz vorzugsweise 5 - 25%, insbesondere 8 bis 20% beträgt. Unter Konvergenz versteht man ein leichtes Zusammenfahren des Querstreckrahmens, so daß die maximale Breite des Rahmens die am Ende des Querstreckprozeßes gegeben ist größer als die Breite am Ende der Thermofixierung ist. Entsprechendes gilt selbstverständlich für die Breite der Folienbahn. Der Grad des Zusammenlaufens des Querstreckrahmens wird als Konvergenz angegeben, die aus der maximalen Breite des Querstreckrahmens $B_{max}$ und der Endfolienbreite $B_{Folie}$ nach der folgenden Formel berechnet wird:

$$\text{Konvergenz } [\%] = 100 \times (B_{max} - B_{Folie}) / B_{max}$$

Abschließend wird die Folie in üblicher Weise mit einer Aufwickeleinrichtung aufgewickelt.

In den bekannten sequentiellen Verfahren, bei denen Längs- und Querstreckung nacheinander in einem Verfahren durchgeführt werden, hängt nicht nur die Querstreckgeschwindigkeit von der Verfahrensgeschwindigkeit ab. Auch die Abzugsgeschwindigkeit und die Abkühlgeschwindigkeit variieren mit der Verfahrensgeschwindigkeit. Diese Parameter können somit nicht unabhängig voneinander gewählt werden. Daraus folgt, daß sich -bei ansonsten gleichen Bedingungen- bei einer langsameren Verfahrensgeschwindigkeit nicht nur die Querstreckgeschwindigkeit reduziert, sondern auch die Abkühl- bzw. Abzugsgeschwindigkeit der Vorfolie. Dies kann, muß aber nicht zwangsläufig, ein zusätzliches Problem darstellen.

In einer weiteren Ausführungsform des erfindungsgemäßen Verfahrens ist es daher vorteilhaft das Verfahren zur Herstellung der sequentiell verstreckten Folie in zwei separate Verfahren aufzuteilen, d.h. in ein erstes Verfahren, welches alle Verfahrensschritte bis einschließlich Abkühlung nach Längsstreckung umfaßt, nachstehend Längsstreckverfahren genannt und in ein zweites Verfahren, welches alle Verfahrensschritte nach dem Längsstreckverfahren umfaßt, nachstehend Querstreckverfahren genannt. Diese Ausführungsform des erfindungsgemäßen Verfahrens als zweistufiges Verfahren ermöglicht es die Verfahrensgeschwindigkeit des ersten Verfahrens, und damit die jeweiligen Bedingungen, insbesondere Abkühl- und Abzugsgeschwindigkeiten, sowie die Längsstreckbedingungen unabhängig von der Querstreckgeschwindigkeit zu wählen. Entsprechend kann in dem zweiten Querstreckverfahren die Querstreckgeschwindigkeit beliebig verlangsamt werden, beispielsweise durch Reduzierung der Verfahrensgeschwindigkeit oder durch die Verlängerung des Streckrahmens, ohne daß die Bildung der ß-Kristallite oder die Längsstreckbedingungen negativ beeinflußt werden. Diese Verfahrensvariante wird umgesetzt indem man das Längsstreckverfahren wie vorstehend beschrieben ausführt und nach der Abkühlung der längsgestreckten Folie diese Folie zunächst aufwickelt. Diese längsverstreckte Folie wird dann im zweiten Querstreckverfahren verwendet, d.h. in diesem zweiten Verfahren erfolgen alle Verfahrensschritte nach Abkühlung der längsgestreckten Folie wie vorstehend beschrieben. Hierbei kann jetzt die optimale Querstreckgeschwindigkeit unabhängig gewählt werden.

Unter den vorstehend genannten Verfahrensgeschwindigkeiten des Längsstreckverfahrens oder des Querstreckverfahrens oder des sequentiellen Verfahrens wird jeweils diejenige Geschwindigkeit, z.B.in m/min, verstanden, mit der die Folie bei der jeweils abschließenden Aufwickelung läuft. Je nach den Gegebenheiten kann beim Querstreckverfahren sowohl eine schneller als auch eine langsamere Verfahrensgeschwindigkeit als beim Längsstreckverfahren vorteilhaft sein.

Die Verfahrensbedingungen bei dem erfindungsgemäßen Verfahren zur Herstellung der porösen Folien unterscheiden sich von den Verfahrensbedingungen, die üblicherweise bei der Herstellung einer biaxial orientierten Folie eingehalten werden. Für die Erzielung einer hohen Porosität und Durchlässigkeit sind sowohl die Abkühlbedingungen bei der Verfestigung zur Vorfolie, als auch die Temperaturen und die Faktoren bei der Verstreckung kritisch. Zunächst muß durch entsprechend langsame und moderate Abkühlung, d.h. bei vergleichsweise hohen Temperaturen, ein hoher Anteil an ß-Kristalliten in der Vorfolie erzielt werden. Bei der anschließende Längsverstreckung werden die ß-Kristalle in die alpha Modifikation umgewandelt, wodurch Störstellen in Form von Mikrorissen entstehen. Damit diese Störstellen in ausreichender Anzahl und in der richtigen Form entstehen muß die Längsstreckung bei vergleichsweise niedrigen Temperaturen erfolgen. Bei der Querstreckung, werden diese Störstellen zu Poren aufgerissen, so daß die charakteristische Netzwerkstruktur dieser porösen Folien entsteht.

Diese, gegenüber herkömmlichen boPP Prozeßen niedrigen Temperaturen, insbesondere bei der Längsstreckung, bedingen hohe Streckkräfte, die zum einen eine hohe Orientierung in die Polymermatrix einbringen und zum anderen die Abrißgefahr erhöhen. Je höher die gewünschte Porosität, um so niedriger müssen die Temperaturen bei der Verstreckung gewählt werden und um so höher müssen die Streckfaktoren sein. Der Prozeß wird daher grundsätzlich um so kritischer je höher die Porosität und Durchlässigkeit der Folie sein soll. Die Porosität kann daher über höhere Streckfaktoren oder Erniedrigung der Strecktemperatur nicht beliebig erhöht werden. Insbesondere die erniedrigte Längsstrecktemperatur führt zu einer stark beeinträchtigen Laufsicherheit der Folie, sowie zu einer unerwünschten Erhöhung der Spleißneigung. Die Porosität kann daher durch niedrigere Längsstrecktemperaturen von beispielsweise unter 70°C nicht mehr weiter verbessert werden.

Im Rahmen der vorliegenden Erfindung wurde gefunden, daß es überraschenderweise möglich ist die Porosität und Durchlässigkeit der Folie zusätzlich über die Streckgeschwindigkeit bei der Querstreckung zu beeinflußen. Eine langsame Querverstreckung erhöht die Porosität und Durchlässigkeit weiter, ohne daß es zu vermehrten Abrißen oder sonstigen Störungen während des Produktionsprozeßes kommt. Die Folie weißt eine bisher nicht darstellbare Kombination aus hoher Porosität und Durchlässigkeit, mechanischer Festigkeit, gute Laufsicherheit beim Herstellprozeß und geringer Spleißneigung in Längsrichtung auf.

Damit kann eine Folie zur Verfügung gestellt werden, die sich auf Grund der hohen Durchlässigkeiten für die Anwendung in DSK eignet und gleichzeitig die Anforderungen an die mechanischen Festigkeiten, insbesondere eine geringe Spleißneigung erfüllt. Die poröse Folie zeigt damit wesentliche Vorteile gegenüber Papierseparatoren oder Vliesen.

Die Folie kann des weiteren vorteilhaft in anderen Anwendungen eingesetzt werden, bei denen sehr hohe Durchlässigkeiten gefordert sind oder sich vorteilhaft auswirken. Beispielsweise als hochporöser Separator in Batterien, insbesondere in Lithium-Batterien mit hohe Anforderung an die Leistung.

Zur Charakterisierung der Rohstoffe und der Folien wurden die folgenden Meßmethoden benutzt:

Schmelzflußindex

Der Schmelzflußindex der Propylenpolymeren wurde nach DIN 53 735 bei 2,16 kg Belastung und 230 °C gemessen.

Schmelzpunkt

Der Schmelzpunkt ist im Sinne der vorliegenden Erfindung das Maximum der DSC Kurve. Zur Bestimmung des Schmelzpunkts wird eine DSC-Kurve mit einer Aufheiz-und Abkühlgeschwindigkeit von 10K/1min im Bereich von 20 bis 200°C aufgenommen. Für die Bestimmung des Schmelzpunkts wird wie üblich die zweite Aufheizkurve nachdem mit 10K/1min im Bereich von 200 bis 20°C abgekühlt wurde ausgewertet.

ß-Gehalt der Vorfolie

Die Bestimmung des ß-Gehaltes der Vorfolie erfolgt ebenfalls über eine DSC-Messung, die an der Vorfolie folgendermaßen durchgeführt wird: Die Vorfolie wird in der DSC zunächst mit einer Aufheizrate von 10K/min auf 220°C erhitzt und aufgeschmolzen und wieder abgekühlt Aus der 1.Aufheizkurve wird der Kristallinitätsgrad $K_{ß,DSC}$ als Verhältnis der Schmelzenthalpien der ß-kristallinen Phase ($H_ß$) zu der Summe der Schmelzenthalpien von ß- und $\alpha$-kristalliner Phase ($H_ß + H_\alpha$) bestimmt.

$$K_{ß,DSC}\ [\%] =\ 100 \times H_ß / (H_ß + H_\alpha)$$

Dichte

Die Dichte wird nach DIN 53 479, Verfahren A, bestimmt.

Bubble Point:

Der Bubble Point wurde nach der ASTM F316 gemessen.

Porosität

Als Porosität wird die Dichtereduzierung ($\rho_{Folie} - \rho_{pp}$) der Folie gegenüber der Dichte des reinen Polypropylens $\rho_{pp}$ wie folgt berechnet:

$$\text{Porosität } [\%] =\ 100 \times (\rho_{pp} - \rho_{Folie}) / \rho_{pp}$$

Permeabilität / Durchlässigkeit (Gurley-Wert)

Die Permeabilität der Folien wurde mit dem Gurley Tester 4110, nach ASTM D 726-58 gemessen. Dabei wird die Zeit (in sec) bestimmt die 100 cm$^3$ Luft benötigen, um durch die Folienfläche von 1 Inch$^2$ (6,452 cm$^2$) zu permeieren. Die Druckdifferenz über der Folie entspricht dabei dem Druck einer Wassersäule von 12,4 cm Höhe. Die benötigte Zeit entspricht dann dem Gurley-Wert.

Einsprung:

Der Einsprung gibt die Breitenänderung der Folie während der Längsverstreckung an. Hierbei bezeichnet $B_0$ die Breite der Folie vor und $B_1$ entsprechend die Breite der Folie nach der Längsverstreckung. Die Längsrichtung ist die Maschinenrichtung, als Querrichtung wird entsprechend die Richtung quer zum Maschinenlauf definiert. Als Einsprung in % wird dann die Differenz der ermittelten Breiten im Verhältnis zur ursprünglichen Breite $B_0$ mal 100 angegeben.

$$\text{Einsprung B } [\%] = [(B_0 - B_{1)} / B_0] * 100\ [\%]$$

Die Erfindung wird nunmehr durch die nachfolgenden Beispiele erläutert.

Beispiel 1

1a: Längsstreckverfahren

Nach dem Extrusionsverfahren wurde aus einer Breitschlitzdüse bei einer Extrusionstemperatur von jeweils 240 bis 250°C eine einschichtige Vorfolie extrudiert. Diese Vorfolie wurde zunächst auf einer Kühlwalze abgezogen und abgekühlt. Anschließend wurde die Vorfolie auf die Längsstrecktemperatur erwärmt und über verschieden schnelllaufende Walzen längsgestreckt. Hierbei beträgt die Länge des Streckspaltes ca. 30mm. Die Breite der Folie hatte sich nach der Längsstreckung um ca.5% reduziert. Danach wird die Folie über Kühlwalzen gefahren und abgekühlt. Die abgekühlte, längsgestreckte Folie wurde dann aufgewickelt.

1b: Querstreckverfahren

Die gewickelte, längsgestreckte Folie wurde anschließend wie folgt quer verstreckt. Die längsgestreckte Folie wird abgewickelt und über Walzen in die Aufheizfeder des Querstreckrahmens geführt, auf die Querstrecktemperatur aufgeheizt und in Querrichtung orientiert. Nach dieser Querorientierung erfolgt die Thermofixierung, bei der die Folie konvergierend gefahren wird. Abschließend wird die Folie aufgewickelt. Die Folie hatte die folgende Zusammensetzung:

Ca. 80 Gew.-% hochisotaktisches Propylenhomopolymerisat (PP) mit einer $^{13}$C-NMR Isotaktizität von 97% und einem n-heptanlöslichen Anteil von 2,5 Gew.-% (bezogen auf 100 % PP) und einem Schmelzpunkt von 165°C; und einem Schmelzflußindex von 2,5 g/10 min bei 230 °C und 2,16 kg Belastung (DIN 53 735) und
ca. 20 Gew.-% Propylen-Ethylen-Blockcopolymerisat mit einem Ethylenanteil von 5 Gew.-% bezogen auf das Blockcopolymer und einem MFI (230°C und 2,16 kg) von 6 g/10min und einem Schmelzpunkt (DSC) von 165°C eingesetzt und
0,04 Gew.-% Ca-Pimelat als ß-Nukleierungsmittel.

Die Folie enthielt zusätzlich in beiden Schichten Stabilisator und Neutralisationsmittel in üblichen geringen Mengen.
Im einzelnen wurde die folgenden Bedingungen und Temperaturen bei der Herstellung der Folie gewählt:

1a: Längsstreckverfahren:

Extrusion:

| | |
|---|---|
| Extrusionstemperatur | 235°C |

Abzug:

| | |
|---|---|
| Temperatur Abzugswalze : | 125°C, |
| Abzugsgeschwindigkeit: | 4m/min |

Längsstreckung:

| | |
|---|---|
| Temperatur Vorheizwalzen: | 90°C |
| Temperatur Streckwalze | 90 °C |
| Längsstreckung um den Faktor | 4.5 |
| Temperatur der Kühlwalze | 90°C: |
| Verweilzeit auf Kühlwalze: | 40s |
| Verfahrensgeschwind igkeit beim Aufwickeln | 18m/min |

1b Querstreckverfahren

Querstreckung:

| | |
|---|---|
| Temperatur Aufheizfelder | 135 °C |
| Temperatur Streckfelder | 135 °C |
| Querstreckung um den Faktor | 5 |
| Streckgeschwindigkeit: | 7,5%/s |

Fixierung:

| | |
|---|---|
| Temperatur | 140 °C |
| Konvergenz | 15% |
| Verweilzeit im Fixierfeld: | 20s |

Die so hergestellte poröse Folie war ca. 25 $\mu$m dick. Die Folie wies eine Dichte von 0,31 g/cm$^3$ auf und zeigte ein gleichmäßiges weiß-opakes Aussehen und einen niedrigen Gurley Wert von 205 s.

Beispiel 2

Es wurde eine Folie wie in Beispiel 1 beschrieben hergestellt. Gegenüber Beispiel 1 wurde nur die Streckgeschwindigkeit bei der Querstreckung geändert. Die längsgestreckte Folie wurde mit einer Geschwindigkeit von 6%/s bei 135°C in Querrichtung verstreckt. Im übrigen wurde die Zusammensetzung der Folie nicht geändert und die übrigen Verfahrensbedingungen wurden beibehalten.
Die so hergestellte poröse Folie war ca. 27 $\mu$m dick. Die Folie wies eine Dichte von 0,29 g/cm$^3$ auf und zeigte ein gleichmäßiges weiß-opakes Aussehen und einen im Vergleich zu Beispiel 1 noch niedrigeren Gurley Wert von 161 s.

Beispiel 3

Es wurde eine Folie wie in Beispiel 1 beschrieben hergestellt. Gegenüber Beispiel 1 wurde nur die Streckgeschwindigkeit bei der Querstreckung geändert. Die längsgestreckte Folie wurde mit einer Geschwindigkeit von 4,5%/s bei 135°C in Querrichtung verstreckt. Im übrigen wurde die Zusammensetzung der Folie nicht geändert und die übrigen Verfahrensbedingungen wurden beibehalten.
Die so hergestellte poröse Folie war ca. 28 $\mu$m dick. Die Folie wies eine Dichte von 0,28 g/cm$^3$ auf und zeigte ein gleichmäßiges weiß-opakes Aussehen und einen Gurley Wert von 130 s.

Beispiel 4

Es wurde eine Folie wie in Beispiel 1 beschrieben hergestellt. Gegenüber Beispiel 1 wurde nur die Streckgeschwindigkeit bei der Querstreckung geändert. Die längsgestreckte Folie wurde mit einer Geschwindigkeit von 2,5%/s bei 135°C in Querrichtung verstreckt. Im übrigen wurde die Zusammensetzung der Folie nicht geändert und die übrigen Verfahrensbedingungen wurden beibehalten.
Die so hergestellte poröse Folie war ca. 29 $\mu$m dick. Die Folie wies eine Dichte von 0,26 g/cm$^3$ auf und zeigte ein gleichmäßiges weiß-opakes Aussehen und einen außergewöhnlich im vgl. zu Bsp. 1 niedrigeren Gurley Wert von 60 s.

Beispiel 5

Es wurde eine Folie wie in Beispiel 1 beschrieben hergestellt. Gegenüber Beispiel 1 wurde nur die Streckgeschwindigkeit bei der Querstreckung geändert. Die längsgestreckte Folie wurde mit einer Geschwindigkeit von 1%/s bei 135°C in Querrichtung verstreckt. Im übrigen wurde die Zusammensetzung der Folie nicht geändert und die übrigen Verfahrensbedingungen wurden beibehalten.
Die so hergestellte poröse Folie war ca. 30 $\mu$m dick. Die Folie wies eine Dichte von 0,25 g/cm$^3$ auf und zeigte

ein gleichmäßiges weiß-opakes Aussehen und einen außergewöhnlich im vgl. zu Bsp. 1 niedrigeren Gurley Wert von 40 s.

Vergleichsbeispiel 1

Es wurde eine Folie wie in Beispiel 1 beschrieben hergestellt. Gegenüber Beispiel 1 wurde nur die Länge des Streckpaltes bei der Längsstreckung geändert. Der Streckspalt wurde auf eine Länge von 150mm geöffnet. Die Breite der längsgereckten Folie verringerte sich durch den Breiteneinsprung in der Längsstreckung um 12%.
Die so hergestellte Folie wies in etwa die gleiche Dichte und den gleichen Gurley-Wert wie die Folie nach Beispiel 1 auf. Allerdings zeigt die Folie aufgrund von Spleißneigung eine eingeschränkte Laufsicherheit. Es kommt bei der Herstellung der Folie sehr häufig zum Einreißen beim Querverstrecken, so daß die Herstellung der Folie unwirtschaftlich wird.

Vergleichsbeispiel 2

Es wurde eine Folie wie in Beispiel 1 beschrieben hergestellt. Gegenüber Beispiel 1 wurde nur die Länge des Streckpaltes bei der Längsstreckung geändert. Der Streckspalt wurde auf eine Länge von 300mm geöffnet. Die Breite der längsgereckten Folie verringerte sich durch den Breiteneinsprung in der Längsstreckung um 22%.
Die so hergestellte Folie wies in etwa die gleiche Dichte und den gleichen Gurley-Wert wie die Folie nach Beispiel 1 auf. Allerdings zeigt die Folie aufgrund von Spleißneigung eine eingeschränkte Laufsicherheit. Es kommt bei der Herstellung der Folie häufig zum Einreißen beim Querverstrecken.

Vergleichsbeispiel 3

Es wurde eine Folie wie in Beispiel 1 beschrieben hergestellt. Gegenüber Beispiel 1 wurde nur die Streckgeschwindigkeit bei der Querstreckung geändert. Die längsgestreckte Folie wurde mit einer erhöhten Geschwindigkeit von 50%/s bei 135°C verstreckt. Im übrigen wurde die Zusammensetzung der Folie nicht geändert und die übrigen Verfahrensbedingungen wurden beibehalten.
Es wurde eine Folie mit nur geringer Porosität von 50% sowie einem Gurleywert von 1250 s erhalten.

Vergleichsbeispiel 4

Es wurde eine Folie wie in Beispiel 1 beschrieben hergestellt. Gegenüber Beispiel 1 wurde nur die Streckgeschwindigkeit bei der Querstreckung geändert. Die längsgestreckte Folie wurde mit einer erhöhten Geschwindigkeit von 100%/s bei 135°C verstreckt. Im übrigen wurde die Zusammensetzung der Folie nicht geändert und die übrigen Verfahrensbedingungen wurden beibehalten.
Es wurde eine Folie mit nur geringerer Porosität von 40% sowie einem unzureichenden Gurleywert von 2800s erhalten.
Die Eigenschaften der Folien der Beispiele 1-5 und den Vergleichsbeispielen 1-4 sind in der nachstehenden Tabelle zusammengefaßt. Es zeigt sich, daß nur die Folien der Beispiele 1-5, die nach dem erfindungsgemäßen Verfahren hergestellt wurden die gewünschte Eigenschaften, wie hohe Porosität und sehr niedriger Gurley-Wert bei gleichzeitiger guter Laufsicherheit während des Produktionsprozesses kombinieren.

Tabelle

| | Längsstreckung Streckspalt [mm] | Einsprung Längsstreckung [%] | Querstreckgeschwindigkeit [%/s] | Laufsicherheit | Porosität [%] | Gurley [s] |
|---|---|---|---|---|---|---|
| Bsp. 1 | 10 | 5 | 7,5 | Gut | 66 | 205 |
| Bsp. 2 | 10 | 5 | 6 | Gut | 68 | 161 |
| Bsp. 3 | 10 | 5 | 4,5 | Gut | 69 | 130 |
| Bsp. 4 | 10 | 5 | 2,5 | Gut | 72 | 60 |
| Bsp. 5 | 10 | 5 | 1 | Gut | 73 | 40 |
| Vgl. 1 | 150 | 12 | 7,5 | Schlecht | 65 | 203 |
| Vgl. 2 | 300 | 22 | 7,5 | Sehr schlecht | 66 | 190 |
| Vgl. 3 | 10 | 5 | 50 | mäßig | 50 | 1250 |
| Vgl. 4 | 10 | 5 | 100 | mäßig* | 40 | 2800 |
| * höhere Orientierung längs verursacht mehr Abriße beim Querstrecken | | | | | | |

**Patentansprüche**

1. Verfahren zur Herstellung einer einschichtigen oder mehrschichtigen porösen Polypropylenfolie bei welchem Propylenpolymer und ß-Nukleierungsmittel in einem Extruder aufgeschmolzen und durch eine Flachdüse auf eine Abzugswalze extrudiert wird, auf der sich der Schmelzefilm unter Ausbildung von ß-Kristalliten abkühlt und verfestigt und diese Folie anschließend in Längsrichtung und danach in Querrichtung verstreckt wird, **dadurch gekennzeichnet, daß** bei der Querverstreckung mit einer langsamen Streckgeschwindigkeit von weniger als 40%/sec verstreckt wird.

2. Verfahren zur Herstellung einer einschichtigen oder mehrschichtigen porösen Polypropylenfolie, bei welchem in einem ersten Längsstreckverfahren Propylenpolymer und ß-Nukleierungsmittel in einem Extruder aufgeschmolzen und durch eine Flachdüse auf eine Abzugswalze extrudiert wird, auf der sich der Schmelzefilm unter Ausbildung von ß-Kristalliten abkühlt und verfestigt und diese Folie anschließend in Längsrichtung verstreckt, abgekühlt und aufgewickelt wird und diese längsverstreckte, aufgewickelte Folie in einem zweiten Querstreckverfahren abgewickelt, auf Querstrecktemperatur erwärmt und in Querrichtung verstreckt wird, **dadurch gekennzeichnet, daß** die Verfahrensgeschwindigkeit des Längsstreckverfahrens größer oder kleiner als die Verfahrensgeschwindigkeit des Querstreckverfahrens ist.

3. Verfahren nach Anspruch 2, **dadurch gekennzeichnet, daß** die Verfahrensgeschwindigkeit des Querstreckverfahrens so gewählt wird, daß die Querverstreckung mit einer Streckgeschwindigkeit von weniger als 40%/sec erfolgt.

4. Verfahren nach einem der Ansprüche 1 bis 3, **dadurch gekennzeichnet, daß** der Einsprung bei der Längsverstreckung weniger als 25% beträgt.

5. Verfahren nach einem der Ansprüche 1 bis 4, **dadurch gekennzeichnet, daß** der Streckspalt eine Länge von unter 100mm bei der Längsverstreckung aufweist.

6. Verfahren nach einem der Ansprüche 1 bis 5, **dadurch gekennzeichnet, daß** die, daß die biaxial verstreckte Folie nach der Herstellung einen Gurley Wert von < 250s aufweist.

7. Verfahren nach einem der Ansprüche 1 bis 6, **dadurch gekennzeichnet, daß** das Propylenpolymere ein Propylenhomopolymer und/oder ein Propylenblockcopolymer ist.

8. Verfahren nach einem der Ansprüche 1 bis 7, **dadurch gekennzeichnet, daß** das Nukleiierungsmittel ein Calciumsalz der Pimelinsäure und/oder der Suberinsäure ist.

9. Verfahren nach einem der Ansprüche 1 bis 8, **dadurch gekennzeichnet, daß** die Folie 50 bis 85 Gew.-% Propylenhomopolymer, 15 bis 50 Gew.-% Propylen-Blockcopolymer und 50 bis 10.000ppm ß-Nukleierungsmittel enthält.

10. Verfahren nach einem der Ansprüche 1 bis 9, **dadurch gekennzeichnet, daß** das die Folie eine Dicke von 10 bis 100$\mu$m aufweist.

**Claims**

1. A method for producing a porous, single-layer or multilayer polypropylene film, in which propylene polymer and $\beta$-nucleating agents are melted in an extruder and extruded through a flat-sheet die onto a draw-off roller, on which the molten film cools and is solidified, forming $\beta$-crystallites, and this film is then drawn in the longitudinal direction and next drawn in the transverse direction, **characterized in that** in transverse drawing, the drawing is carried out at a slow drawing rate of less than 40%/sec.

2. The method for producing a porous single-layer or multilayer polypropylene film, in which propylene polymer and $\beta$-nucleating agents are melted in an extruder in a first longitudinal drawing operation and extruded through a flat-sheet die onto a draw-off roller, on which the molten film cools and solidifies, forming $\beta$-crystallites, and this film is then drawn in the longitudinal direction, cooled and wound up, and this longitudinally drawn and wound-up film is unwound in a second transverse drawing operation, heated to the transverse drawing temperature and drawn in the transverse direction, **characterized in that** the process speed of the longitudinal drawing operation is greater or less than the process speed of the transverse drawing operation.

3. The method according to claim 2, **characterized in that** the process speed of the transverse drawing operation is selected so that the transverse drawing is carried out at a drawing rate of less than 40%/sec.

4. The method according to any one of claims 1 to 3, **characterized in that** the shrinkage in longitudinal drawing amounts to less than 25%.

5. The method according to any one of claims 1 to 4, **characterized in that** the drawing gap has a length of less than 100 mm in longitudinal drawing.

6. The method according to any one of claims 1 to 5, **characterized in that** the biaxially drawn film has a Gurley value of <250s after being produced.

7. The method according to any one of claims 1 to 6, **characterized in that** the propylene polymer is a propylene homopolymer and/or a propylene block copolymer.

8. The method according to any one of claims 1 to 7, **characterized in that** the nucleating agent is a calcium salt of pimelic acid and/or suberic acid.

9. The method according to any one of claims 1 to 8, **characterized in that** the film contains 50% to 85% by weight propylene homopolymer, 15% to 50% by weight block copolymer and 50 to 10,000 ppm $\beta$-nucleating agent.

10. The method according to any one of claims 1 to 9, **characterized in that** the film has a thickness of 10 to 100 $\mu$m.

## Revendications

1. Procédé de fabrication d'une feuille de polypropylène poreuse monocouche ou multicouche, consistant à faire fondre du polymère de propylène et de l'agent de nucléation $\beta$ dans une extrudeuse puis à réaliser, à travers une filière plate, une extrusion sur un cylindre récepteur sur lequel le film de matière fondue se refroidit en formant des cristallites $\beta$ et se solidifie, pour ensuite soumettre la feuille ainsi obtenue à une orientation d'abord dans le sens longitudinal puis dans le sens transversal, **caractérisé en ce que** l'orientation dans le sens transversal est réalisée à une faible vitesse d'orientation inférieure à 40 % / sec.

2. Procédé de fabrication d'une feuille de polypropylène poreuse monocouche ou multicouche, consistant à faire fondre, dans le cadre d'un premier procédé d'orientation longitudinale, du polymère de propylène et de l'agent de nucléation $\beta$ dans une extrudeuse puis à réaliser, à travers une filière plate, une extrusion sur un cylindre récepteur sur lequel le film de matière fondue se refroidit en formant des cristallites $\beta$ et se solidifie, pour ensuite soumettre la feuille ainsi obtenue à une orientation dans le sens longitudinal, la refroidir et l'enrouler et puis, dans le cadre d'un deuxième procédé d'orientation transversale, à dérouler cette feuille enroulée orientée longitudinalement pour la porter à la température d'orientation transversale et l'orienter dans le sens transversal, **caractérisé en ce que** la vitesse de procédé du procédé d'orientation longitudinale est supérieure ou inférieure à la vitesse de procédé du procédé d'orientation transversale.

3. Procédé selon la revendication 2, **caractérisé en ce que** la vitesse de procédé du procédé d'orientation transversale est choisie telle que la orientation transversale est réalisée avec une vitesse d'orientation inférieure à 40 % / sec.

4. Procédé selon l'une des revendications 1 à 3, **caractérisé en ce que**, lors de l'orientation longitudinale, le rétrécissement est inférieur à 25 %.

5. Procédé selon l'une des revendications 1 à 4, **caractérisé en ce que**, lors de l'orientation longitudinale, la fente permettant de réaliser l'orientation présente une longueur inférieure à 100 mm.

6. Procédé selon l'une des revendications 1 à 5, **caractérisé en ce que** la feuille biaxialement orientée présente, suite à sa fabrication, un indice de Gurley < 250 s.

7. Procédé selon l'une des revendications 1 ou 6, **caractérisé en ce que** le polymère de propylène est un homopolymère de propylène et/ou un copolymère à blocs de propylène.

8. Procédé selon l'une des revendications 1 à 7, **caractérisé en ce que** l'agent de nucléation est un sel de calcium de l'acide pimélique et/ou de l'acide subérique.

9. Procédé selon l'une des revendications 1 à 8, **caractérisé en ce que** la feuille contient 50 à 85 % en poids d'homopolymère de propylène, 15 à 50 % en poids de copolymère à blocs de propylène et 50 à 10 000 ppm d'agent de nucléation β.

10. Procédé selon l'une des revendications 1 à 9, **caractérisé en ce que** ladite feuille présente une épaisseur comprise entre 10 et 100 μm.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 7235203 B
- WO 2009132803 A
- EP 1757653 A
- WO 03094832 A
- WO 2011076375 A
- DE 3610644
- DE 4420989
- EP 0557721 A